# EUROPEAN PATENT APPLICATION

(11) **EP 4 660 011 A1**
(43) Date of publication of application: **10.12.2025**
(21) Application number: 24223061.3
(22) Date of filing: 23.12.2024
(51) Int. Cl.: B60Q 1/08, B60Q 1/20

(54) **HEADLIGHT SYSTEM**

(30) Priority: 07.06.2024 TW 113121353
(71) Applicant: Coplus Inc., Tainan City 709031 (TW)
(72) Inventor: WU, Po-Hua, 709031 Tainan City (TW)
(74) Representative: V.O.

(57) **Abstract**

A headlight system (200) for a vehicle includes a headlight (3) including a first illuminator (31) and a second illuminator (32) that are configured to respectively emit light of different colors, a sensor module (5) and a controller (6). The sensor module (5) is configured to sense a surroundings of the vehicle to generate a sensing data set. The controller (6) stores a plurality of parameter conditions and a plurality of brightness settings that correspond respectively to the parameter conditions. The controller (6) includes a processing module (61) configured to analyze the sensing data set to obtain a plurality of surrounding parameter values, select one of the parameter conditions based on the surrounding parameter values, and select one of the brightness settings that corresponds to the one of the parameter conditions, and a brightness control module (62) configured to control brightness of light emitted by said first illuminator (31) and the brightness of light emitted by said second illuminator (32) according to the one of the brightness settings, such that light emitted by said headlight (3) produces a predetermined light beam pattern.

## Description

The disclosure relates to a headlight system, and more particularly to a headlight system for a vehicle.

In order to improve vehicle driving safety, many vehicles are now equipped with conventional headlight systems that feature automatic headlight adjustment capabilities. The conventional headlight systems are able to control headlights of a vehicle to turn on a low beam or a high beam based on images captured in front of the vehicle. Some of the conventional headlight systems are even capable of adjusting the angle of the headlights when the vehicle is making a turn to provide enhanced lighting and clearer cornering vision. However, the headlights of most of the conventional headlight systems are configured to emit monochromatic light (usually white light), and some vehicle owners will replace the original headlights with other headlights that have yellow light configurations. Generally, white light offers better illumination brightness, but its illumination effect is poor in foggy and heavy rain environments. In contrast, yellow light has better penetrability in foggy and heavy rain environments, and creates greater color contrast when shone on objects, which helps with object identification in the surroundings. However, yellow light offers relatively lower illumination brightness. Therefore, the conventional headlight systems that produce monochromatic light cannot meet the demands of various driving environments, and still has room for improvement.

Therefore, an object of the disclosure is to provide a headlight system that can alleviate at least one of the drawbacks of the prior art.

According to an aspect of the disclosure, there is provided a headlight system according to claim 1.

Other features and advantages of the disclosure will become apparent in the following detailed description of the embodiment(s) with reference to the accompanying drawings. It is noted that various features may not be drawn to scale.

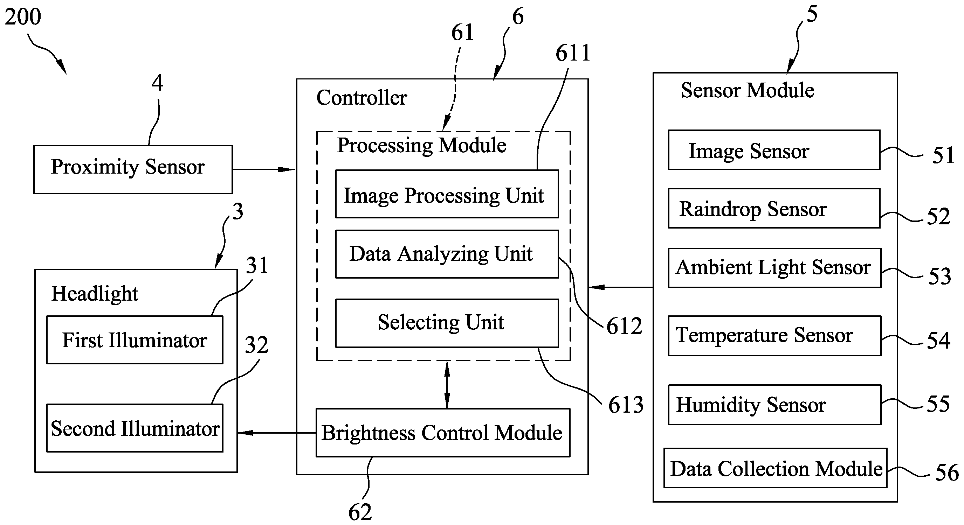

The sole figure of this application is a block diagram of a headlight system according to an embodiment of the present disclosure.

Before the disclosure is described in greater detail, it should be noted that where considered appropriate, reference numerals or terminal portions of reference numerals have been repeated among the figures to indicate corresponding or analogous elements, which may optionally have similar characteristics.

Referring to the figure, a headlight system 200 according to an embodiment of the present disclosure is adapted to be mounted on a vehicle (not shown) for providing illumination in front of the vehicle. The headlight system 200 includes a headlight 3, a proximity sensor 4, a sensor module 5 and a controller 6. The controller 6 is electrically connected to the headlight 3, the proximity sensor 4 and the sensor module 5.

The headlight 3 is adapted to be mounted on the vehicle, and includes a first illuminator 31 and a second illuminator 32 that are controllable to respectively emit light of different colors. Generally, the headlight 3 further includes a housing (not shown), in which the first illuminator 31 and the second illuminator 32 are disposed; the housing includes a mounting base (not shown) on which the first illuminator 31 and the second illuminator 32 are disposed, and a projector lens (not shown) that is transparent. The projector lens is located in a front position of the mounting base in front of the first illuminator 31 and the second illuminator 32. The projector lens is employed for adjusting a projection angle of light emitted by the first illuminator 31 and/or the second illuminator 32 to be projected in a certain angle such that when the light penetrates through the projector lens, the light is projected forward to form a light beam pattern such as a low beam pattern or a high beam pattern. Since there are various types of housings and this aspect is not the focus of the present disclosure, further descriptions thereof will be omitted for the sake of brevity. In this embodiment, the first illuminator 31 and the second illuminator 32 respectively emit white light and yellow light.

The proximity sensor 4 is mounted on a front portion of the vehicle, and is employed for detecting presence of an object within a predetermined distance from the vehicle. For example, when the proximity sensor 4 detects an object within three meters, five meters or ten meters of the vehicle, the proximity sensor 4 generates a detection signal. In this embodiment, the proximity sensor 4 is an optical sensor such as a light detection and ranging (LiDAR) sensor. In other embodiments, the proximity sensor 4 may be exemplified by an ultrasonic sensor or a microwave radar sensor, but this disclosure is not limited to these examples.

The sensor module 5 is configured to sense a surroundings of the vehicle and generates a sensing data set that indicates results of the sensor module 5. In this embodiment, the sensor module 5 includes a data collection module 56, and an image sensor 51, a raindrop sensor 52, an ambient light sensor 53, a temperature sensor 54 and a humidity sensor 55 that are electrically connected to the data collection module 56.

The image sensor 51 may be mounted on, for example, but not limited to, the front portion or an electronic rearview mirror of the vehicle to capture an image of the surroundings (e.g., a front scenery) of the vehicle so as to generate image data related to the surroundings of the vehicle. In this embodiment, the image sensor 51 is embodied using, for example, a charge-coupled device (CCD) sensor or a complementary metal-oxide-semiconductor (CMOS) sensor, but this disclosure is not limited to these examples.

The raindrop sensor 52 may be disposed on, for example, but not limited to, an inner surface of a front windshield of the vehicle (not shown) to detect raindrops on the front windshield so as to generate raindrop data. In this embodiment, the raindrop sensor 52 detects the raindrops using optical technology, where the raindrop sensor 52 shines a detecting light (e.g., an infrared light) on the front windshield and detects an amount of the detecting light that is reflected back to the raindrop sensor 52, so as to detect presence of raindrops and an amount of rainfall in the surroundings of the vehicle; however, the disclosure is not limited in this respect.

The ambient light sensor 53 may be disposed on, for example, but not limited to, the electronic rearview mirror of the vehicle or the inner surface of the front windshield of the vehicle, and is configured to detect ambient light of the surroundings of the vehicle so as to generate ambient light data that indicates an ambient light intensity of the surroundings of the vehicle. In this embodiment, the ambient light sensor 53 may be embodied using, for example, a photoresistor, a photodiode, or a photonic crystal sensor, but this disclosure is not limited to these examples.

The temperature sensor 54 is employed to detect temperature of the surroundings of the vehicle so as to generate temperature data that indicate the temperature of the surroundings of the vehicle. The temperature sensor 54 is exemplified as, for example, an infrared temperature sensor, but this disclosure is not limited to this example.

The humidity sensor 55 is employed to detect humidity of the surroundings of the vehicle so as to generate humidity data that indicate the humidity of the surroundings of the vehicle. The humidity sensor 55 is exemplified as, for example, a capacitive humidity sensor, but this disclosure is not limited to this example.

Since the image sensor 51, the raindrop sensor 52, the ambient light sensor 53, the temperature sensor 54 and the humidity sensor 55 are all existing components and each have various types, further descriptions thereof will be omitted for the sake of brevity.

The data collection module 56 is employed for receiving the image data, the raindrop data, the ambient light data, the temperature data and the humidity data respectively from the image sensor 51, the raindrop sensor 52, the ambient light sensor 53, the temperature sensor 54 and the humidity sensor 55, so as to generate the sensing data set that includes all the aforementioned data thus received. The data collection module 56 may include, but is not limited to, a single core processor, a multi-core processor, a dual-core mobile processor, a microprocessor, a microcontroller, a digital signal processor (DSP), a field-programmable gate array (FPGA), an application specific integrated circuit (ASIC), and/or a radio-frequency integrated circuit (RFIC), etc.

The controller 6 stores a plurality of parameter conditions and a plurality of brightness settings that correspond respectively to the parameter conditions. The brightness settings further correspond respectively to a plurality of predetermined light beam patterns.

Each of the parameter conditions includes a plurality of preset parameter values that collectively represent a specific surrounding condition. For each parameter condition, the preset parameter values include fixed values, ranges of values, or a combination thereof, and correspond respectively to a plurality of surrounding parameters, such as visibility of the surroundings, ambient chromaticity of the surroundings, ambient color temperature of the surroundings, amount of rainfall in the surroundings, ambient light intensity of the surroundings, temperature of the surroundings, and humidity of the surroundings, but this disclosure is not limited to these examples.

Each of the brightness settings includes two brightness level settings respectively for the first illuminator 31 and the second illuminator 32. Examples of the brightness level settings are: a brightness value of light emitted by the first illuminator 31 being zero (i.e., 0% of the full brightness of the first illuminator 31), and a brightness value of light emitted by the second illuminator 32 being maximum (i.e., 100% of the full brightness of the second illuminator 32); 100% of the full brightness for the first illuminator 31, and 0% of the full brightness for the second illuminator 32; 10% of the full brightness for the first illuminator 31, and 80% of the full brightness for the second illuminator 32; 50% of the full brightness for the first illuminator 31, and 50% of the full brightness for the second illuminator 32; and 80% of the full brightness for the first illuminator 31, and 10% of the full brightness for the second illuminator 32. However, the brightness level settings respectively for the first illuminator 31 and the second illuminator 32 are not limited to these examples.

The controller 6 includes a processing module 61 and a brightness control module 62. In certain embodiments, the processing module 61 performs data analysis on the sensing data set to obtain a plurality of surrounding parameter values related respectively to the surrounding parameters, selects one of the parameter conditions based on the surrounding parameter values thus obtained, and selects one of the brightness settings that corresponds to the one of the parameter conditions thus selected. The brightness control module 62 controls brightness of the light emitted by the first illuminator 31 and brightness of the light emitted by the second illuminator 32 according to the one of the brightness settings thus selected, such that light emitted by said headlight 3 forms one of the predetermined light beam patterns corresponding to the one of the brightness settings thus selected. In this embodiment, the controller 6 is activated by the detection signal received from the proximity sensor 4, such that the processing module 61 and the brightness control module 62 are activated to respectively start operating when the controller 6 receives the detection signal.

The processing module 61 includes an image processing unit 611, a data analyzing unit 612, and a selecting unit 613. The image processing unit 611 performs image analysis on the image data included in the sensing data set using conventional image processing technology to obtain a visibility value related to the visibility of the surroundings, an ambient chromaticity value related to the ambient chromaticity of the surroundings, and an ambient color temperature value related to the ambient color temperature of the surroundings. The surrounding parameter values at least include the visibility value, the ambient chromaticity value and the ambient color temperature value.

The data analyzing unit 612 performs data analysis on the raindrop data, the ambient light data, the temperature data and the humidity data included in the sensing data set to respectively obtain a raindrop value related to the amount of rainfall in the surroundings of the vehicle, an ambient light intensity value related to the ambient light intensity of the surroundings of the vehicle, a temperature value related to the temperature of the surroundings of the vehicle, and a humidity value related to the humidity of the surroundings of the vehicle. The surrounding parameter values further include the raindrop value, the ambient light intensity value, the temperature value and the humidity value.

The selecting unit 613 compares the surrounding parameter values obtained from the image processing unit 611 and the data analyzing unit 612 respectively with the preset parameter values included in each of the parameter conditions, and selects one of the parameter conditions that has the preset parameter values respectively matching the surrounding parameter values thus obtained. Specifically, the selecting unit 613 determines that the preset parameter values of one of the parameter conditions match the surrounding parameter values thus obtained when each values included in the surrounding parameter values matches a respective one of the fixed values or falls within a respective one of the ranges of values of the preset parameter values. In response to determining that the preset parameter values of one of the parameter conditions match the surrounding parameter values thus obtained, the selecting unit 613 then selects one of the brightness settings that corresponds to the one of the parameter conditions thus determined.

The brightness control module 62 controls the brightness of light emitted by the first illuminator 31 and the brightness of light emitted by the second illuminator 32 according to the one of the brightness settings thus selected by the selecting unit 613, such that the light emitted by the headlight 3 penetrates through the projector lens of the housing and is projected to form the corresponding one of the predetermined light beam patterns. Specifically, when only the first illuminator 31 or the second illuminator 32 emits light, light of a single color (e.g., white or yellow) generated by the first illuminator 31 or the second illuminator 32 penetrates through the projector lens of the housing to form the predetermined light beam pattern; when both the first illuminator 31 and the second illuminator 32 emit light, a combined light penetrates through the projector lens of the housing to form the predetermined light beam pattern.

The controller 6 may be embodied using, but not limited to, a system on a chip (SoC), a microcontroller, etc., and may include a central processing unit (CPU) and a memory that stores a software application. The software application includes instructions that, when executed by the CPU, cause the CPU to perform operations of the controller 6 as described above. In some embodiments, the CPU executing different portions of the software application may serve as the image processing unit 611, the data analyzing unit 612 and the selecting unit 613 of the processing module 61, and the brightness control module 62. In some embodiments, each of the processing module 61 and the brightness control module 62 may be embodied using hardware elements, software elements, or a combination of both; examples of hardware elements may include processors, microprocessors, circuits, integrated circuits, application specific integrated circuits (ASIC), programmable logic devices (PLD), digital signal processors (DSP), field programmable gate array (FPGA), logic gates, registers, semiconductor device, chips, microchips, chip sets, and so forth.

When the headlight system 200 is installed on the vehicle and is activated, the sensor module 5 may continuously sense the surroundings of the vehicle to generate the sensing data set; that is to say, the sensing data set may be continuously updated. When the proximity sensor 4 detects presence of an object within the predetermined distance from the vehicle and thus generates the detection signal, the controller 6 is activated by the detection signal, such that the processing module 61 starts to perform data analysis on the sensing data set that is most recently received from the sensor module 5 to obtain the surrounding parameter values, select one of the parameter conditions based on the surrounding parameter values thus obtained, and select one of the brightness settings that corresponds to the one of the parameter conditions thus selected, and the brightness control module 62 starts to control the brightness of the light emitted by the first illuminator 31 and the brightness of the light emitted by the second illuminator 32 according to the one of the brightness settings thus selected, so that light generated by the first illuminator 31 and/or the second illuminator 32 penetrates through the projector lens of the housing to form the predetermined light beam pattern.

In this embodiment, each of the parameter conditions stored in the controller 6 includes the preset parameter values that correspond respectively to the visibility of the surroundings, the ambient chromaticity of the surroundings, the ambient color temperature of the surroundings, the amount of rainfall in the surroundings, the ambient light intensity of the surroundings, the temperature of the surroundings, and the humidity of the surroundings. The controller 6 selects one of the parameter conditions based on the surrounding parameter values thus obtained (i.e., the one of the parameter conditions that has the preset parameter values matching the surrounding parameter values thus obtained), selects one of the brightness settings according to the one of the parameter conditions thus selected, and control the brightness of the light emitted by the first illuminator 31 and the second illuminator 32 according to the one of the brightness settings thus selected. However, in other embodiments, the raindrop sensor 52, the ambient light sensor 53, the temperature sensor 54 and the humidity sensor 55 may be omitted; that is to say, each of the parameter conditions does not include the preset parameter values that correspond respectively to the amount of rainfall in the surroundings, the ambient light intensity of the surroundings, the temperature of the surroundings, and the humidity of the surroundings, and in such embodiments, the controller 6 is configured to select one of the parameter conditions and one of the brightness settings based on the surrounding parameter values that are obtained by the controller 6 performing data analysis only on the image data of the sensing data set.

In summary, the headlight 3 includes the first illuminator 31 and the second illuminator 32 that are able to respectively emit different colors of light. The sensor module 5 is able to sense the surrounding of the vehicle to generate the sensing data set. The controller 6 is able to perform data analysis on the sensing data set to obtain the surrounding parameter values, select one of the parameter conditions based on the surrounding parameter values thus obtained, select one of the brightness settings based on the one of the parameter conditions thus selected, and control the brightness of the light emitted respectively by the first illuminator 31 and the second illuminator 32 according to the one of the brightness settings thus selected. Through the abovementioned configurations, the headlight system 200 of this disclosure, when installed on a vehicle, is able to automatically control the brightness of light emitted by the first illuminator 31 and the second illuminator 32 according to the surroundings of the vehicle, thereby enabling the headlight 3 to produce lighting with a color temperature suitable for current surroundings of the vehicle.

In the description above, for the purposes of explanation, numerous specific details have been set forth in order to provide a thorough understanding of the embodiment(s). It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects; such does not mean that every one of these features needs to be practiced with the presence of all the other features. In other words, in any described embodiment, when implementation of one or more features or specific details does not affect implementation of another one or more features or specific details, said one or more features may be singled out and practiced alone without said another one or more features or specific details. It should be further noted that one or more features or specific details from one embodiment may be practiced together with one or more features or specific details from another embodiment, where appropriate, in the practice of the disclosure.

## Claims

1. A headlight system (200) for a vehicle, **characterized by**:
a headlight (3) adapted to be mounted on the vehicle, and including a first illuminator (31) and a second illuminator (32) that are configured to respectively emit light of different colors;
a sensor module (5) configured to sense a surroundings of the vehicle and generate a sensing data set indicating sensing results of said sensor module (5); and
a controller (6) electrically connected to said headlight (3) and said sensor module (5), storing a plurality of parameter conditions and a plurality of brightness settings that correspond respectively to the plurality of parameter conditions, and including
a processing module (61) configured to perform data analysis on the sensing data set to obtain a plurality of surrounding parameter values, select one of the plurality of parameter conditions based on the plurality of surrounding parameter values thus obtained, and select one of the plurality of brightness settings that corresponds to said one of the plurality of parameter conditions thus selected, and
a brightness control module (62) configured to control brightness of light emitted by said first illuminator (31) and brightness of light emitted by said second illuminator (32) according to said one of the plurality of brightness settings thus selected, such that light emitted by said headlight (3) forms a predetermined light beam pattern.

2. The headlight system (200) as claimed in Claim 1, wherein said sensor module (5) includes an image sensor (51) configured to capture an image of the surroundings of the vehicle so as to generate image data related to the surroundings of the vehicle, and a data collection module (56) configured to generate the sensing data set that includes the image data received from said image sensor (51),
wherein said processing module (61) is configured to perform image analysis on the image data included in the sensing data set to obtain a visibility value related to visibility of the surroundings, an ambient chromaticity value related to ambient chromaticity of the surroundings and an ambient color temperature value related to ambient color temperature of the surroundings, the plurality of surrounding parameter values at least including the visibility value, the ambient chromaticity value and the ambient color temperature value.

3. The headlight system (200) as claimed in Claim 2, further comprising a proximity sensor (4) adapted to be mounted on the vehicle and configured to detect presence of an object within a predetermined distance from the vehicle and generate a detection signal upon detecting presence of an object,
wherein said controller (6) is configured to be activated by the detection signal, such that said processing module (61) starts to perform data analysis on the sensing data set to obtain the plurality of surrounding parameter values, select said one of the plurality of parameter conditions based on the plurality of surrounding parameter values thus obtained, and select said one of the plurality of brightness settings that corresponds to said one of the plurality of parameter conditions thus selected, and said brightness control module (62) starts to control the brightness of the light emitted by said first illuminator (31) and the brightness of the light emitted by said second illuminator (32) according to said one of the plurality of brightness settings thus selected.

4. The headlight system (200) as claimed in Claim 3, wherein said proximity sensor (4) is a light detection and ranging sensor.

5. The headlight system (200) as claimed in any one of Claims 2 to 4, wherein said sensor module (5) further includes a raindrop sensor (52) configured to detect raindrops so as to generate raindrop data, and said data collection module (56) is configured to generate the sensing data set that further includes the raindrop data,
wherein said processing module (61) includes
an image processing unit (611) configured to perform image analysis on the image data included in the sensing data set to obtain the visibility value, the ambient chromaticity value and the ambient color temperature value,
a data analyzing unit (612) configured to perform data analysis on the raindrop data included in the sensing data set to obtain a raindrop value that is related to an amount of rainfall in the surroundings of the vehicle, the plurality of surrounding parameter values further including the raindrop value, and
a selecting unit (613) configured to select said one of the plurality of parameter conditions based on the plurality of surrounding parameter values obtained by said image processing unit (611) and said data analyzing unit (612), and select said one of the plurality of brightness settings that corresponds to said one of the plurality of parameter conditions thus selected.

6. The headlight system (200) as claimed in Claim 5, wherein said sensor module (5) further includes an ambient light sensor (53) configured to detect ambient light of the surroundings of the vehicle so as to generate ambient light data indicating an ambient light intensity of the surroundings of the vehicle, and said data collection module (56) is configured to generate the sensing data set that further includes the ambient light data,
wherein said data analyzing unit (612) is further configured to perform data analysis on the ambient light data included in the sensing data set to obtain an ambient light intensity value that is related to the ambient light intensity of the surroundings of the vehicle, the plurality of surrounding parameter values further including the ambient light intensity value.

7. The headlight system (200) as claimed in Claim 5 or 6, wherein said sensor module (5) further includes a temperature sensor (54) configured to detect temperature of the surroundings of the vehicle so as to generate temperature data indicating the temperature of the surroundings of the vehicle, and said data collection module (56) is configured to generate the sensing data set that further includes the temperature data,
wherein said data analyzing unit (612) is further configured to perform data analysis on the temperature data included in the sensing data set to obtain a temperature value that is related to the temperature of the surroundings of the vehicle, the plurality of surrounding parameter values further including the temperature value.

8. The headlight system (200) as claimed in any one of Claims 5 to 7, wherein said sensor module (5) further includes a humidity sensor (55) configured to detect humidity of the surroundings of the vehicle so as to generate humidity data indicating the humidity of the surroundings of the vehicle, and said data collection module (56) is configured to generate the sensing data set that further includes the humidity data,
wherein said data analyzing unit (612) is further configured to perform data analysis on the humidity data included in the sensing data set to obtain a humidity value that is related to the humidity of the surroundings of the vehicle, the plurality of surrounding parameter values further including the humidity value.

9. The headlight system (200) as claimed in any one of Claims 1 to 8, wherein said first illuminator (31) and said second illuminator (32) are configured to respectively emit white light and yellow light.
